# EUROPÄISCHE PATENTSCHRIFT

(11) **EP 4 305 387 B1**
(45) Veröffentlichungstag und Bekanntmachung des Hinweises auf die Patenterteilung: **15.07.2026**
(21) Anmeldenummer: 22710067.4
(22) Anmeldetag: 03.03.2022
(51) Int. Cl.: G01D 11/30, G01P 1/02

(54) **KLEMMHÜLSE ZUR MONTAGE EINES DREHFÜHLERS SOWIE DREHFÜHLERANORDNUNG UND DREHFÜHLERSYSTEM MIT EINER SOLCHEN KLEMMHÜLSE**
CLAMPING SLEEVE FOR MOUNTING A ROTATION SENSOR, AND ROTATION SENSOR ARRANGEMENT AND ROTATION SENSOR SYSTEM HAVING SUCH A CLAMPING SLEEVE
MANCHON DE FIXATION POUR LE MONTAGE D'UN CAPTEUR DE ROTATION, ENSEMBLE CAPTEUR DE ROTATION ET SYSTÈME DE CAPTEUR DE ROTATION COMPORTANT UN TEL MANCHON DE FIXATION

(30) Priorität: 12.03.2021 DE 102021202438
(43) Veröffentlichungstag der Anmeldung: 17.01.2024
(73) Patentinhaber: KNORR-BREMSE Systeme für Nutzfahrzeuge GmbH, 80809 München (DE)
(72) Erfinder: KLEIN, Günter, 72669 Unterensingen (DE)
(86) Internationale Anmeldenummer: PCT/EP2022/055370
(87) Internationale Veröffentlichungsnummer: WO 2022/189244

(56) Entgegenhaltungen:
- WO-A1-2006/047899
- DE-A1- 102012 024 762
- DE-A1- 102013 000 204
- DE-A1- 102017 113 604

## Beschreibung

Die Erfindung betrifft eine Klemmhülse zur Montage eines Drehfühlers in eine in einer Aufnahmevorrichtung vorgesehenen Aufnahmeöffnung sowie eine Drehfühleranordnung und ein Drehfühlersystem mit einer solchen Klemmhülse.

Aktive Drehzahlfühler benötigen eine Verdrehsicherung, um eine korrekte Richtungserkennung sicherzustellen. Hierzu wird der Drehfühler beispielsweise in eine Aufnahmeöffnung einer Aufnahmevorrichtung oder in einen in der Aufnahmeöffnung befindlichen Aufnahmesitz eingeschraubt oder weist zu dieser bzw. diesem korrespondierende Formschlusselemente auf. Um den Änderungsaufwand für die jeweilige Vorsehung des Formschlusses zu reduzieren, können alternativ Drehfühler eingesetzt werden, die keine Verdrehsicherung benötigen, um eine korrekte Richtungserkennung sicherzustellen. Derartige Drehfühler benötigen jedoch ein aufwendiges und vergleichsweise kostenintensives Sensorsystem.

Beispielsweise betrifft die DE 10 2012 024 762 A1 eine Klemmbuchse für einen Sensor zur reibschlüssigen Fixierung und Justierung des Sensors in einer Bohrung eines Halteteils, wobei die Klemmbuchse mit mindestens zwei federnden Zungen und mindestens drei Festpunkten versehen ist, wobei die mindestens zwei federnden Zungen jeweils an einer Seite mit der Klemmbuchse verbunden und jeweils an ihrer Spitze frei beweglich sind, wobei weiterhin an der Klemmbuchse eine Feinjustierzunge angeordnet ist.

Die DE 10 2017 113 604 A1 betrifft eine Anordnung eines stabförmigen Drehimpulsgebers und einer Klemmhülse in einer Bohrung einer Halterung zur Erfassung einer Drehzahl eines Rotors, wobei die Klemmhülse verdrehsicher in der Bohrung positioniert ist und der Drehimpulsgeber mit einem Sensorkopf axial verschiebbar in der Klemmhülse kraftschlüssig gehalten ist.

Die DE 10 2013 000 204 A1 betrifft eine Sensorvorrichtung zur Drehzahlmessung an einem Rad eines Fahrzeugs. Die Sensorvorrichtung weist einen Sensorträger mit einem in den Sensorträger integrierten Sensor auf, um für die Drehzahlmessung die Drehung eines mit dem Rad mitdrehenden Polrades zu sensieren. Die Sensorvorrichtung weist in den Sensorträger integrierte Klemmmittel auf, mittels denen der Sensorträger für die Drehzahlmessung in einer Halteöffnung im Bereich des Rades verrückbar klemmbar ist und/oder in beliebiger Orientierung bezüglich Drehungen um die Längsachse des Sensorträgers klemmbar ist.

Die WO 2006/047899 A1 betrifft die Befestigung eines Sensors mit einem zylinderartig ausgebildeten Gehäuse an einer Maschinenteilbohrung, wozu eine Büchse mindestens teilweise in die Bohrung eingeführt. Das Sensorgehäuse bzw. eine Montagehülse wird mittels einer radial wirkenden Klemmverbindung kraftschlüssig mit der Büchse verbunden.

In Anbetracht der vorstehenden Ausführungen ist es somit Aufgabe der Erfindung, eine Verdrehsicherung für einen Drehfühler bereitzustellen, durch die der jeweilige Anpassungsaufwand reduziert wird.

Die Aufgabe wird durch eine Klemmhülse zur Montage eines Drehfühlers, eine Drehfühleranordnung sowie ein Drehfühlersystem gemäß den nebengeordneten Ansprüchen gelöst. Vorteilhafte Weiterbildungen der Erfindung sind in den abhängigen Ansprüchen enthalten.

Erfindungsgemäß ist eine Klemmhülse zur Montage eines Drehfühlers in eine in einer Aufnahmevorrichtung vorgesehenen Aufnahmeöffnung mit einer Längsachse, um die sich zumindest abschnittsweise eine Mantelfläche der Klemmhülse in Richtung der Längsachse erstreckt, dazu ausgebildet, zumindest abschnittsweise in die Aufnahmeöffnung eingeführt und unter Reibschluss darin gehalten zu werden, und die Klemmhülse ist zudem korrespondierend zu dem zu montierenden Drehfühler ausgebildet, so dass bei Einführung des Drehfühlers in die Klemmhülse ein Formschluss zwischen dem Drehfühler und der Klemmhülse ausbildbar ist.

Demnach erfolgt die Verdrehsicherung des Drehfühlers in einer Aufnahmeöffnung einer Aufnahmevorrichtung für den Drehfühler über die Klemmhülse, die mit der Aufnahmeöffnung zumindest einen Reibschluss und mit dem Drehfühler zumindest einen Formschluss ausbildet. Mit anderen Worten kann der Drehfühler über eine Kombination aus Reibschluss und Formschluss verdrehsicher in der Aufnahmeöffnung gehalten werden. Entsprechend dieser Kombination kann die bereits vorhandene Klemmhülse durch geringfügige Anpassung als Verdrehsicherung dienen, so dass auf zusätzliche Formschlusselemente, wie Extrahülsen, oder eine jeweils individuell vorzusehende Formschlusskonturierung der Aufnahmeöffnung der Aufnahmevorrichtung verzichtet werden kann.

Der Formschluss zwischen der Klemmhülse und dem Drehfühler ist zumindest in einer Richtung vorzusehen, in der die Verdrehsicherung erfolgen soll. Korrespondiert die vorzusehende Verdrehsicherungsrichtung beispielsweise zu einer Drehrichtung um die Längsachse der Klemmhülse, so ist zumindest ein Formschluss in dieser Richtung vorzusehen.

Zur Längsachse sei zudem angemerkt, dass diese hier in Bezug auf die Klemmhülse bzw. deren Mantelfläche, die die Längsachse zumindest abschnittsweise umgibt, angegeben ist. Die Längsachse der Klemmhülse definiert aber auch gleichermaßen eine Längsachse des Drehfühlers und der Aufnahmevorrichtung bzw. Aufnahmeöffnung. Mit anderen Worten ist die Längsachse der Klemmhülse auch die Längsachse des Drehfühlers und der Aufnahmevorrichtung in einem später noch beschriebenen Drehfühlersystem. Der über das Drehfühlersystem ersichtliche Achsenbezug wird für die Einzelkomponenten übernommen.

Zudem weist die Klemmhülse in Richtung der Längsachse zumindest abschnittsweise einen Schlitz auf, der zumindest zu einer dem Drehfühler bei der Montage zugewandten Seite geöffnet ist.

Über die sich in Richtung der Längsachse erstreckenden, einander zugewandten Seite des Schlitzes kann in einfacher Weise ein Formschlussabschnitt der Klemmhülse gebildet werden, der dazu ausgebildet ist, einen hierzu korrespondierenden Formschlussabschnitt des Drehfühlers aufzunehmen. Da die Klemmhülse bei Montage in der Aufnahmeöffnung der Aufnahmevorrichtung darin über Reibschluss gehalten wird, ist durch das Eingreifen des Formschlussabschnitts des Drehfühlers in den Schlitz eine Verdrehsicherung möglich, so dass sich der Drehfühler nicht um die Längsachse drehen kann.

Der Schlitz ist zur Einführung des Drehfühlers bzw. des Formschlusselementabschnitts des Drehfühlers zumindest auf der dem Drehfühler bei der Montage zugewandten Seite der Klemmhülse geöffnet. Sofern der Schlitz zu beiden Seiten der Klemmhülse geöffnet, also durchgängig, ist, kann eine Einführung des Drehfühlers in die Klemmhülse von beiden Seiten erfolgen. Zudem kann der Drehfühler in der Klemmhülse in axialer Richtung flexibel positioniert werden. Es kann aber auch vorgesehen werden, den Schlitz in der Klemmhülse nur über eine vorbestimmte Länge in Richtung der Längsachse vorzusehen. Das dem offenen Ende abgewandte Ende des Schlitzes kann dann beispielsweise als Anschlag für den Drehfühler bzw. den Formschlussabschnitt des Drehfühlers genutzt werden, der eine vorbestimmte Montageposition des Drehfühlers in der Klemmhülse in Richtung der Längsachse definiert.

Darüber hinaus weist der Schlitz zumindest auf beiden der sich in Richtung der Längsachse erstreckenden Seiten zumindest abschnittsweise einen radial nach innen angestellten Endabschnitt auf.

Der nach innen angestellte Endabschnitt ermöglicht den Ausgleich von Toleranzen in radialer Richtung in Bezug auf die Längsachse. Demnach kann der Formschlussabschnitt des Drehfühlers mit größerer Sicherheit mit der Klemmhülse in Eingriff gebracht werden. Alternativ oder ergänzend kann die Klemmhülse auch im Bereich des Schlitzes eine größere radiale Erstreckung, also Wandstärke, aufweisen.

Gemäß einer Weiterbildung ist der nach innen angestellte Endabschnitt elastisch bzw. federnd ausgebildet.

Mit anderen Worten weist der nach innen angestellte Endabschnitt eine Erstreckung auf, insbesondere eine radiale Erstreckung, die elastisch bzw. federnd ausgebildet ist. Bevorzugt weist der nach innen angestellte Endabschnitt eine radiale Erstreckung von 1 mm oder weniger auf. Die radiale Erstreckung der nach innen angestellten Endabschnitte entspricht dabei nicht der Länge der angestellten Endabschnitte, sondern dem sich in Bezug auf die Längsachse radialen Abstand zwischen dem sich an die Mantelfläche anschließenden Endes des angestellten Endabschnittes und dem dazu abgewandten Ende. Mit anderen Worten kann der radiale Abstand als x*sin(α) angegeben werden, wobei x der Länge des Endabschnitts von einem der Mantelfläche zugewandten Ende zu einem hiervon abgewandten Ende entspricht und α der Anstellwinkel zwischen der äußeren Mantelfläche und dem angestellten Endabschnitt ist.

Durch die elastische bzw. federnde radiale Erstreckung kann ein ausreichender Toleranzausgleich geschaffen werden, ohne beispielsweise bei einem bis auf den Formschlussabschnitt zylindrischen Drehfühler eine wesentliche Exzentrizität des Drehfühlersensors berücksichtigen zu müssen oder eine umlaufende Stützfläche für den Drehfühler durch die Klemmhülse wesentlich zu vermindern. Durch diesen Toleranzausgleich kann eine Verdrehsicherung mit einer radialen Erstreckung von 1 mm oder weniger realisiert werden. Somit ist der Änderungsaufwand beim Umstieg auf einen aktiven Drehzahlfühler geringer. Der Formschlussabschnitt auf dem Drehzahlfühler kann niedriger ausgebildet werden als ohne elastische Erstreckung.

In einer Ausgestaltung weist die Klemmhülse an einem in Bezug auf die Längsachse axialen Endabschnitt zumindest abschnittsweise einen Klemmhülsenvorsprung auf, der in Bezug auf die Längsachse radial nach außen ragt.

Der in Bezug auf die Längsachse radial nach außen ragende Klemmhülsenvorsprung kann als Anschlag für die Montage der Klemmhülse in der Aufnahmeöffnung der Aufnahmevorrichtung dienen, so dass die Klemmhülse eine vorbestimmte Relativposition in der Aufnahmeöffnung in Richtung der Längsachse nicht überschreitet. Sofern die Klemmhülse derart ausgestaltet ist, dass eine vorgegebene Montagerichtung einzuhalten ist, kann diese durch den radialen Klemmhülsenvorsprung auch direkt visuell erkannt werden. In einem solchen Fall wäre beispielsweise die Klemmhülse in eine Bohrung als Aufnahmeöffnung zunächst mit dem den radialen Klemmhülsenvorsprung aufweisenden Endabschnitt abgewandten Ende einzuführen.

Der radiale Klemmhülsenvorsprung kann bei nur abschnittsweise Ausbildung auch mit einer hierzu korrespondierenden Aussparung auf der bei Einführung der Klemmhülse dieser zugewandten Stirnseite formschlüssig in Eingriff gebracht werden, so dass hierüber eine positionsgerichtete Montage der Klemmhülse in der Aufnahmeöffnung vorgesehen werden kann, wie dies später nochmals im Sinne einer Montagehilfe aufgegriffen wird.

Der radiale Klemmhülsenvorsprung kann eine endseitige Stirnfläche der Klemmhülse ausbilden, aber auch innerhalb des Endabschnitts in Richtung der Längsachse von einer solchen Stirnfläche rückversetzt sein.

In einer Ausführung weist die Klemmhülse an ihrer Mantelfläche zumindest ein Federelement auf.

Ein solches Federelement kann beispielsweise in Bezug auf die Längsachse zumindest eine radial nach außen wirkende Federkraft aufbringen, um den Reibschluss zwischen der Klemmhülse und der Aufnahmeöffnung auszubilden oder zu unterstützen. Alternativ oder ergänzend kann das Federelement aber auch derart konfiguriert werden, dass es zumindest eine radial nach innen wirkende Federkraft aufbringt, um neben dem Formschluss zwischen der Klemmhülse und dem Drehfühler auch einen Reibschluss zu ermöglichen, um beispielsweise die Formschlusselemente zu entlasten oder eine zusätzliche Verdrehsicherung vorzusehen.

In einer Weiterbildung weist Klemmhülse eine Montagehilfe zur positionsgerichteten Montage in der Aufnahmeöffnung auf.

Die Montagehilfe ist derart ausgebildet, dass die Klemmhülse in der Aufnahmeöffnung der Aufnahmevorrichtung positionsgerichtet montierbar ist, also mit einer vorbestimmten Winkelposition in Bezug auf die Längsachse übereingebracht werden kann. Somit ist dann bei Montage des Drehfühlers über die Lage des Formschlussabschnitts der Klemmhülse und den korrespondierenden Formschlussabschnitt des Drehfühlers die Winkelposition des Drehfühlers in Bezug auf die Längsachse definiert. Die Montagehilfe zur positionsgerichteten Montage der Klemmhülse in der Aufnahmeöffnung kann über optische, mechanische und/oder elektrische Orientierungshilfen ausgebildet werden.

Insbesondere ist die Montagehilfe aus einem aus der Aufnahmeöffnung in der Anwendungsposition vorstehenden Dorn mit einer daran angebrachten Wasserwaage ausgebildet.

Die Wasserwaage als optische Montagehilfe wird beispielsweise an einer Position der Klemmhülse vorgesehen, bei der sich eine Libelle oder ein hierzu korrespondierender Indikator bei einer vorbestimmten positionsgerichteten Montageposition der Klemmhülse genau zwischen den Begrenzungsanzeigen befindet. Es können auch Wasserwaagen mit mehreren Achsen einsetzbar sein.

Alternativ oder ergänzend wird die Montagehilfe aus einem Dorn mit einer daran angebrachten Schablone ausgebildet.

Die Schablone ist an Teile der Geometrie des Gehäuses, in dem der Drehzahlfühler verbaut ist, so angepasst, dass der Dorn mit der Klemmhülse nur in der vorgesehenen Winkellage in die Bohrung geschoben werden kann.

Weiterhin alternativ oder ergänzend bildet die Montagehilfe mit der Aufnahmevorrichtung einen Formschluss aus.

Ein entsprechender Formschluss kann beispielsweise auch über den vorstehenden radialen Klemmhülsenvorsprung in Zusammenwirken mit einer korrespondierenden Aussparung in der Aufnahmevorrichtung als Montagehilfe dienen. Der radiale Klemmhülsenvorsprung kann somit insbesondere als Montagehilfe und als Anschlag genutzt werden.

In einer Weiterbildung Klemmhülse ist die Montagehilfe lösbar mit der Klemmhülse verbunden.

Durch die lösbare Verbindung zwischen Klemmhülse und Montagehilfe können zum Beispiel durch die Montagehilfe bedingte Störkonturen nach der positionsgerichteten Montage der Klemmhülse in der Aufnahmeöffnung entfernt werden. Der Begriff der lösbaren Verbindung ist dabei nicht auf zerstörungsfreie lösbare Verbindungen beschränkt, sondern kann auch Sollbruchstellen und dergleichen umfassen. Im Sinne einer Wiederverwendbarkeit je nach Komplexität und somit Kosten sind jedoch zerstörungsfrei lösbare Verbindung zu bevorzugen, wie sie exemplarisch über aufschraubbare Montagehilfen bereitgestellt werden können.

In einem weiteren Aspekt betrifft die Erfindung eine Drehfühleranordnung, die eine vorstehend beschrieben Klemmhülse und einen Drehfühler, der dazu ausgebildet ist, zumindest abschnittsweise in Richtung der Längsachse in die Klemmhülse eingeführt zu werden, ausweist, wobei der Drehfühler zumindest abschnittsweise einen Drehfühlervorsprung aufweist, der in Bezug auf die Längsachse radial nach außen ragt, so dass bei Einführung des Drehfühlers in die Klemmhülse über den Drehfühlervorsprung ein Formschluss zwischen dem Drehfühler und der Klemmhülse ausbildbar ist.

Der radiale Drehfühlervorsprung des Drehfühlers dient somit als Formschlussabschnitt des Drehfühlers, der zur Verdrehsicherung um die Längsachse mit einem hierzu korrespondierenden Formschlussabschnitt der Klemmhülse in Eingriff gebracht werden kann. Der radiale Drehfühlervorsprung kann dabei als Stift oder auch als sich in Richtung der Längsachse, also in axialer Richtung, erstreckender radialer Drehfühlervorsprung ausgebildet sein. Sofern ein oder mehrere radiale Drehfühlervorsprünge in Richtung der Längsachse mit mehreren Flächen des Formschlussabschnitts der Klemmhülse verdrehsicher zusammengreifen, kann ein Verkippen des Drehfühlers in der Klemmhülse verhindert werden, was ggf. zu einem Verkanten des Drehfühlers in der Klemmhülse bei entsprechendem Spiel führen könnte. Alternativ oder ergänzend kann der Drehfühler auch zumindest eine Aussparung aufweisen, in den zumindest ein in Bezug auf die Längsachse radial nach innen weisender Klemmhülsenvorsprung eingreift, der so ausgebildet ist, dass er mit der Aussparung einen Formschluss bildet.

Gemäß einer Ausgestaltung erstreckt sich der Drehfühlervorsprung in Richtung der Längsachse zumindest über einen Abschnitt, der den Formschluss mit der Klemmhülse in einer vorbestimmten Anwendungsposition ausbildet.

Beispielsweise kann die Drehfühleranordnung so ausgebildet sein, dass ein Formschluss zwischen Klemmhülse und Drehfühler nicht über den gesamten möglichen Montageweg entlang der Längsachse ergibt, sondern lediglich in einer vorbestimmten Anwendungsposition, das heißt, einer vorbestimmten Relativposition zwischen Klemmhülse und Drehfühler. Demnach kann vor und nach der vorbestimmten Anwendungsposition eine Verdrehsicherung nicht mehr gegeben sein. In einem solchen Fall kann somit anhand des Vorliegens der Verdrehsicherung oder eben des Ausbleibens und somit zumindest einer gewissen Verdrehmöglichkeit die anwendungsgerechte Positionierung des Drehfühlers in der Klemmhülse geprüft werden. Beispielsweise kann ein sich in der Klemmhülse zum Formschluss vorgesehener Schlitz von einer Aufnahmeseite für den Drehfühler in Richtung der Längsachse verjüngen und erst nach einer vorbestimmten Einführungsstrecke einen Formschluss mit dem radialen Drehfühlervorsprung ausbilden. Solange der Drehfühler nicht ausreichend wie in die Klemmhülse eingeführt wird, ergibt sich somit noch eine gewisse Verdrehbarkeit. Gemäß einem weiteren Beispiel können auch der radiale Drehfühlervorsprung und/oder der Formschlussabschnitt der Klemmhülse jeweils nur in einem vorbestimmten Bereich ausgebildet sein, wobei die Bereiche zum Formschluss in Überdeckung zu bringen sind. Die Länge des Überdeckungsbereichs entspricht der den möglichen vorbestimmten Anwendungspositionen. Es können entlang der Längsachse auch mehrere Überdeckungsbereiche vorgesehen werden, wenn mehrere vorbestimmte Anwendungspositionen vorgesehen werden sollen.

Die Erfindung betrifft zudem ein Drehfühlersystem, das eine vorstehend beschriebene Klemmhülse, einen Drehfühler gemäß der vorstehend beschriebenen Drehfühleranordnung sowie eine Aufnahmevorrichtung mit zumindest einer Aufnahmeöffnung, die sich in Richtung der Längsachse erstreckt, aufweist, wobei die Klemmhülse zumindest über Reibschluss und der Drehfühler zumindest über Formschluss mit der Klemmhülse verdrehsicher in der Aufnahmeöffnung gehalten werden.

Wie bereist vorstehend ausgeführt, ergibt sich über die Anordnung und Ausgestaltung der Klemmhülse in der Aufnahmeöffnung ein Reibschluss, so dass der Drehfühler bei formschlüssigem Eingriff in die Klemmhülse in dieser verdrehsicher gehalten wird. Vorteile und Ausgestaltungen ergeben sich analog zu den bisherigen Ausführungen.

In einer Ausgestaltung ist die Aufnahmeöffnung eine Durchgangsöffnung in Richtung der Längsachse.

Der Drehfühler kann somit auf der der Einführungsseite des Drehfühlers in die Aufnahmevorrichtung bzw. Aufnahmeöffnung abgewandten Seite aus der Aufnahmeöffnung ragen und somit möglichst nahe an eine Messstelle herangeführt werden. Alternativ kann die Aufnahmeöffnung jedoch auch nicht durchgängig ausgebildet werden, so dass die der Einführseite abgewandte Seite der Aufnahmeöffnung geschlossen oder zumindest kleiner als das eingeführte Ende des Drehfühlers ist, um dieses zu schützen und/oder für dieses einen Anschlag gemäß einer vorbestimmten Anwendungsposition zu bilden.

Im Folgenden wird die Erfindung anhand einer Ausführungsform unter Hinzuziehung der beigefügten Figuren näher erläutert. Die Figuren zeigen im Einzelnen:
**Figur 1** zeigt eine perspektivische Ansicht eines Drehfühlersystems mit einer Klemmhülse gemäß einer ersten Ausführungsform der Erfindung.
**Figur 2** zeigt eine Querschnittsansicht der Aufnahmevorrichtung mit der darin montierten Klemmhülse gemäß **Figur 1** in einer Schnittebene senkrecht zur Längsachse.

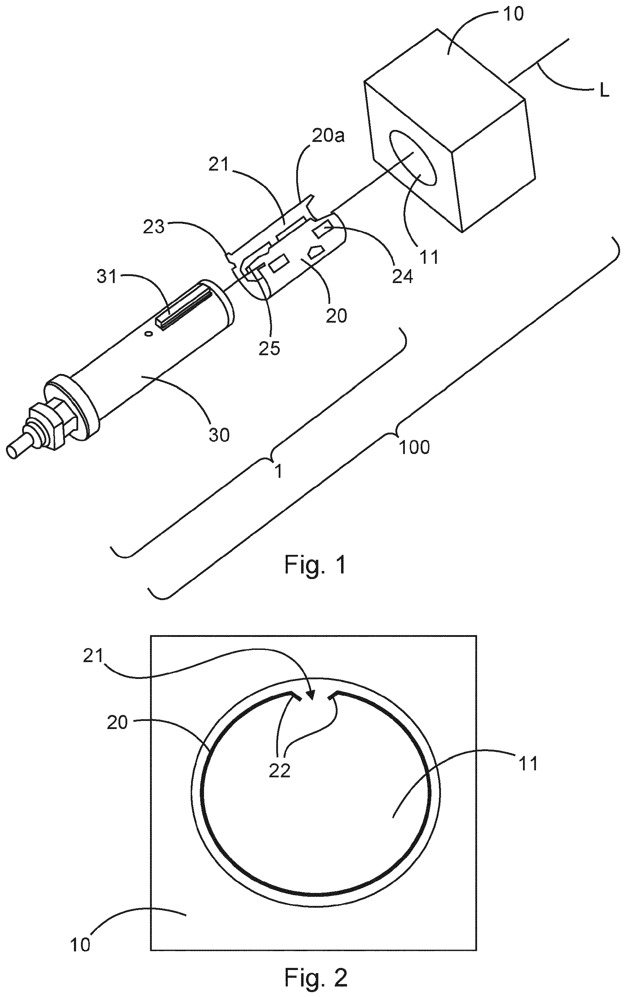

**Figur 1** zeigt eine perspektivische Ansicht eines Drehfühlersystems 100 gemäß einer ersten Ausführungsform der vorliegenden Erfindung. Das Drehfühlersystem 100 umfasst eine Aufnahmevorrichtung 10 mit einer Aufnahmeöffnung 11, die als Durchgangsöffnung ausgebildet ist und sich entlang einer Längsachse L erstreckt. Zudem umfasst das Drehfühlersystem 100 eine Drehfühleranordnung 1, die eine Klemmhülse 20 sowie einen Drehfühler 30 aufweist. Eine Mantelfläche 20a der Klemmhülse 20 erstreckt sich in axialer Richtung um die Längsachse L und bildet einen ebenfalls in axialer Richtung verlaufenden Schlitz 21 aus, der in dieser Ausführungsform zu beiden Seiten der Klemmhülse in Richtung der Längsachse geöffnet ist und einen konstanten Abstand aufweist. Auf einer der Aufnahmeöffnung 11 abgewandten Seite der Klemmhülse 20 weist diese darüber hinaus einen radiale nach außen ragenden Klemmhülsenvorsprung 23 auf, der als Anschlag dient, so dass der Einführungsweg der Klemmhülse in die Aufnahmeöffnung 11 über den radialen Klemmhülsenvorsprung 23 begrenzt wird. Auf der Seite des radialen Klemmhülsenvorsprungs 23 ist zudem eine Montagehilfe 25 vorgesehen. Diese Montagehilfe 25 ist als in Richtung der Längsdachse weisender Vorsprung ausgebildet, der mit einer an der bei der Einführung der Klemmhülse 20 in die Aufnahmeöffnung 11 der Klemmhülse zugewandten Seite der Aufnahmevorrichtung 10 hier nicht gezeigten Markierung zur positionsgerechten Montage in Überdeckung zu bringen ist. Des Weiteren bildet die Mantelfläche 20a Federelemente 24 aus, deren Federkraft jeweils zumindest in radialer Richtung in Bezug auf die Längsachse L nach außen wirkt, um den Reibschluss der Klemmhülse 20 in der Aufnahmeöffnung 11 zu unterstützen. Im Hinblick auf den Reibschluss ist die Klemmhülse 20 zudem derart konfiguriert, dass sie bei der Einführung in die Aufnahmeöffnung 11 elastisch zusammengedrückt wird, um durch die elastische Rückstellkraft zumindest abschnittsweise ebenfalls einen Reibschluss auszubilden. Alternativ kann die Klemmhülse 20 in die Aufnahmeöffnung 11 eingepresst werden.

Zur Ausbildung eines Formschlusses mit der Klemmhülse 20 weist der Drehfühler 30 einen in Bezug auf die Längsachse L radial nach außen ragenden Drehfühlervorsprung 31 auf. Die Breite des Drehfühlervorsprungs in Umfangsrichtung korrespondiert zu der Breite des Schlitzes 21, der in Bezug auf **Figur 2** noch näher erläutert wird, um mit diesem einen Formschluss zur verdrehsicheren Halterung des Drehfühlers 30 in der Klemmhülse 20 auszubilden. Der Drehfühler 30 ist demnach nur soweit in die Klemmhülse 20 einzuführen, dass der Drehfühlervorsprung 31 einen Überdeckungsbereich mit dem Schlitz 21 aufweist.

Zur Ausbildung des Schlitzes 21 der Klemmhülse 20 zum formschlüssigen Eingriff des Drehfühlervorsprungs 31 zeigt **Figur 2** eine Querschnittsansicht der Aufnahmevorrichtung 10 mit der in der Aufnahmeöffnung 11 montierten Klemmhülse 20 gemäß **Figur 1** in einer Schnittebene senkrecht zur Längsachse L. Auch wenn die Klemmhülse 20 hier als von der Aufnahmeöffnung 11 beabstandet eingezeichnet ist, ist die Klemmhülse 20 als mit der Aufnahmeöffnung 11 unter Reibschluss verbunden zu verstehen. Alternativ kann auch vorgesehen sein, dass der Reibschluss erst durch Einführung des Drehfühlers 30 und einem damit verbundenen Aufspreizen der Klemmhülse 20 einhergeht. Der Schlitz 21 wird an seinen jeweils gegenüberliegenden Seiten, die sich in Richtung der Längsachse L erstrecken, durch angestellte Endabschnitte 22 der Klemmhülse 20 begrenzt, die sich in Bezug auf die Längsachse L radial nach innen erstrecken. Gegenüber nicht angestellten Endabschnitten wird hierüber der Bereich des Formschlusses zwischen dem Drehfühlervorsprung 31 und den Endabschnitten 22 gemäß der Länge und dem Anstellwinkel der Endabschnitte 22 in Richtung der Längsachse radial nach innen versetzt. Hierüber erfolgt ein Toleranzausgleich in radialer Richtung. Sofern die angestellten Endabschnitte verformbar ausgebildet sind, sich also in Umfangsrichtung in jeweils entgegengesetzte Richtung zum Schlitz 21 bewegen lassen, kann auch ein Toleranzausgleich in Breitenrichtung des radialen Drehfühlervorsprungs 31 erfolgen.

Die Erfindung ist nicht auf die beschriebenen Ausführungsformen, aber auf die vorliegenden Ansprüche beschränkt. Auch wenn der Schlitz 21 gemäß der angeführten ersten Ausführungsform durchgängig ausgebildet ist, kann er ausgehend von der Seite zur Einführung des Drehfühlers 30 nur über eine vorbestimmte Einführungsstrecke vorgesehen sein. Das Ende eines solchen Schlitzes kann somit als Anschlag für den Drehfühler 30 bzw. den radialen Drehfühlervorsprung 31 in einer vorbestimmten Anwendungsposition oder anderweitige Einführungsbegrenzung genutzt werden. Darüber hinaus sind beschriebene Merkmale unter einander beliebig kombinierbar, sofern sie sich nicht vernünftigerweise ausschließen. So können die Federelemente 24 alternativ oder ergänzend eine radial nach innen gerichtete Federkraft aufbringen und/oder auch als Montagehilfe genutzt werden, wenn beispielsweise die Umfangsfläche der Aufnahmeöffnung 11 entsprechende Federelementaufnahmen aufweist.

### BEZUGSZEICHENLISTE

- 1: Drehfühleranordnung
- 10: Aufnahmevorrichtung
- 11: Aufnahmeöffnung
- 20: Klemmhülse
- 20a: Mantelfläche
- 21: Schlitz
- 22: nach innen angestellter Endabschnitt
- 23: Klemmhülsenvorsprung
- 24: Federelement
- 25: Montagehilfe
- 30: Drehfühler
- 31: Drehfühlervorsprung
- 100: Drehfühlersystem
- L: Längsachse

## Patentansprüche

1. Klemmhülse (20) zur Montage eines Drehfühlers (30) in eine in einer Aufnahmevorrichtung (10) vorgesehenen Aufnahmeöffnung (11) mit einer Längsachse (L), um die sich zumindest abschnittsweise eine Mantelfläche (20a) der Klemmhülse in Richtung der Längsachse (L) erstreckt, wobei die Klemmhülse (20) dazu ausgebildet ist, zumindest abschnittsweise in die Aufnahmeöffnung (11) eingeführt und unter Reibschluss darin gehalten zu werden, **dadurch gekennzeichnet, dass**
die Klemmhülse (20) zudem korrespondierend zu dem zu montierenden Drehfühler (30) ausgebildet ist, so dass bei Einführung des Drehfühlers (30) in die Klemmhülse (20) ein Formschluss zwischen dem Drehfühler (30) und der Klemmhülse (20) ausbildbar ist,
wobei die Klemmhülse (20) in Richtung der Längsachse (L) zumindest abschnittsweise einen Schlitz (21) aufweist, der zumindest zu einer dem Drehfühler (30) bei der Montage zugewandten Seite geöffnet ist, und
wobei der Schlitz (21) auf beiden der sich in Richtung der Längsachse (L) erstreckenden Seiten zumindest abschnittsweise einen radial nach innen angestellten Endabschnitt (22) aufweist, die dazu ausgebildet sind, um mit einem Drehfühlervorsprung (31) des Drehfühlers (30) den Formschluss zwischen dem Drehfühler (30) und der Klemmhülse (20) auszubilden.

2. Klemmhülse (20) nach Anspruch 1, wobei der nach innen angestellte Endabschnitt (22) elastisch bzw. federnd ausgebildet ist.

3. Klemmhülse (20) nach einem der vorherigen Ansprüche, wobei die Klemmhülse (20) an einem in Bezug auf die Längsachse (L) axialen Endabschnitt zumindest abschnittsweise einen Klemmhülsenvorsprung (23) aufweist, der in Bezug auf die Längsachse (L) radial nach außen ragt.

4. Klemmhülse (20) nach einem der vorherigen Ansprüche, wobei die Klemmhülse (20) an ihrer Mantelfläche (20a) zumindest ein Federelement (24) aufweist.

5. Klemmhülse (20) nach einem der vorherigen Ansprüche, wobei die Klemmhülse (20) eine Montagehilfe (25) zur positionsgerichteten Montage in der Aufnahmeöffnung (11) aufweist.

6. Klemmhülse (20) nach Anspruch 5, wobei die Montagehilfe (25) aus einem aus der Aufnahmeöffnung (11) in der Anwendungsposition vorstehenden Dorn mit einer daran angebrachten Wasserwaage ausgebildet ist.

7. Klemmhülse (20) nach Anspruch 5 oder 6, wobei die Montagehilfe (25) aus einem Dorn mit einer daran angebrachten Schablone ausgebildet wird.

8. Klemmhülse (20) nach einem der Ansprüche 5 bis 7, wobei die Montagehilfe (25) mit der Aufnahmevorrichtung (10) einen Formschluss ausbildet.

9. Klemmhülse nach einem der Ansprüche 5 bis 8, wobei die Montagehilfe (25) lösbar mit der Klemmhülse (20) verbunden ist.

10. Drehfühleranordnung (1), aufweisend:
eine Klemmhülse (20) nach einem der Ansprüche 1 bis 9 und
einen Drehfühler (30), der dazu ausgebildet ist, zumindest abschnittsweise in Richtung der Längsachse (L) in die Klemmhülse (20) eingeführt zu werden,
wobei der Drehfühler (30) zumindest abschnittsweise einen Drehfühlervorsprung (31) aufweist, der in Bezug auf die Längsachse (L) radial nach außen ragt, so dass bei Einführung des Drehfühlers (30) in die Klemmhülse (20) über den Drehfühlervorsprung (31) ein Formschluss zwischen dem Drehfühler (30) und der Klemmhülse (20) ausbildbar ist.

11. Drehfühleranordnung (1) nach Anspruch 10, wobei sich der Drehfühlervorsprung (31) in Richtung der Längsachse (L) zumindest über einen Abschnitt erstreckt, der den Formschluss mit der Klemmhülse in einer vorbestimmten Anwendungsposition ausbildet.

12. Drehfühlersystem (100), aufweisend:
eine Klemmhülse (20) nach einem der Ansprüche 1 bis 9,
einen Drehfühler (30) gemäß der Drehfühleranordnung (1) nach Anspruch 10 oder 11 sowie
eine Aufnahmevorrichtung (10) mit zumindest einer Aufnahmeöffnung (11), die sich in Richtung der Längsachse (L) erstreckt,
wobei die Klemmhülse zumindest über Reibschluss und der Drehfühler (30) zumindest über Formschluss mit der Klemmhülse (20) verdrehsicher in der Aufnahmeöffnung (11) gehalten werden.

13. Drehfühlersystem (100) nach Anspruch 12, wobei die Aufnahmeöffnung (11) eine Durchgangsöffnung in Richtung der Längsachse (L) ist.

## Claims

1. A clamping sleeve (20) for mounting a rotation sensor (30) in a receiving opening (11) provided in a receiving device (10) and having a longitudinal axis (L) around which a lateral surface (20a) of the clamping sleeve extends at least in sections in the direction of the longitudinal axis (L), the clamping sleeve (20) being designed to be inserted at least in sections into the receiving opening (11) and to be held therein with frictional engagement, **characterized in that**
the clamping sleeve (20) is also designed to correspond to the rotation sensor (30) to be mounted, so that a positive fit can be formed between the rotation sensor (30) and the clamping sleeve (20) when the rotation sensor (30) is inserted into the clamping sleeve (20),
wherein the clamping sleeve (20) has a slot (21) in the direction of the longitudinal axis (L), at least in sections, which slot is open at least on a side facing the rotation sensor (30) during mounting, and
wherein the slot (21) has on both sides extending in the direction of the longitudinal axis (L), at least in sections, a radially inwardly set end section (22), which are designed to form the positive fit between the rotation sensor (30) and the clamping sleeve (20) with a rotation sensor projection (31) of the rotation sensor (30).

2. The clamping sleeve (20) according to claim 1, wherein the inwardly set end section (22) is designed to be elastic or resilient.

3. The clamping sleeve (20) according to any one of the preceding claims, wherein the clamping sleeve (20) has a clamping sleeve projection (23) on an axial end section with respect to the longitudinal axis (L) at least in sections, which projection projects radially outwards with respect to the longitudinal axis (L).

4. The clamping sleeve (20) according to any one of the preceding claims, wherein the clamping sleeve (20) has at least one spring element (24) on its lateral surface (20a).

5. The clamping sleeve (20) according to any one of the preceding claims, wherein the clamping sleeve (20) has a mounting aid (25) for position-oriented mounting in the receiving opening (11).

6. The clamping sleeve (20) according to claim 5, wherein the mounting aid (25) is formed from a mandrel projecting from the receiving opening (11) in the application position with a spirit level attached thereto.

7. The clamping sleeve (20) according to claim 5 or 6, wherein the assembly aid (25) is formed from a mandrel with a template attached thereto.

8. The clamping sleeve (20) according to any one of claims 5 to 7, wherein the mounting aid (25) forms a positive fit with the receiving device (10).

9. The clamping sleeve according to any one of claims 5 to 8, wherein the mounting aid (25) is detachably connected to the clamping sleeve (20).

10. A rotation sensor arrangement (1), having:
a clamping sleeve (20) according to any one of claims 1 to 9 and
a rotation sensor (30), which is designed to be inserted into the clamping sleeve (20) at least in sections in the direction of the longitudinal axis (L),
wherein the rotation sensor (30) has, at least in sections, a rotation sensor projection (31) which projects radially outwards in relation to the longitudinal axis (L), so that when the rotation sensor (30) is inserted into the clamping sleeve (20), a positive fit can be formed between the rotation sensor (30) and the clamping sleeve (20) via the rotation sensor projection (31).

11. The rotation sensor arrangement (1) according to claim 10, wherein the rotation sensor projection (31) extends in the direction of the longitudinal axis (L) at least over a section which forms the positive fit with the clamping sleeve in a predetermined application position.

12. A rotation sensor system (100), having:
a clamping sleeve (20) according to any one of claims 1 to 9,
a rotation sensor (30) according to the rotation sensor arrangement (1) according to claim 10 or 11, and
a receiving device (10) with at least one receiving opening (11) which extends in the direction of the longitudinal axis (L),
wherein the clamping sleeve is held at least by frictional engagement and the rotation sensor (30) is held in a non-rotatable manner at least by positive fit with the clamping sleeve (20) in the receiving opening (11).

13. The rotation sensor system (100) according to claim 12, wherein the receiving opening (11) is a passage opening in the direction of the longitudinal axis (L).

## Revendications

1. Douille de serrage (20) pour le montage d'un capteur de rotation (30) dans une ouverture de réception (11) prévue dans un dispositif de réception (10) avec un axe longitudinal (L), autour duquel une surface enveloppe (20a) de la douille de serrage s'étend au moins par sections en direction de l'axe longitudinal (L), dans laquelle la douille de serrage (20) est réalisée afin d'être introduite au moins par sections dans l'ouverture de réception (11) et maintenue à l'intérieur par frottement, **caractérisée en ce que**
la douille de serrage (20) est de plus réalisée de manière correspondante au capteur de rotation (30) à monter de sorte qu'une liaison à complémentarité de formes puisse être réalisée entre le capteur de rotation (30) et la douille de serrage (20) lors de l'introduction du capteur de rotation (30) dans la douille de serrage (20),
dans laquelle la douille de serrage (20) présente au moins par sections en direction de l'axe longitudinal (L) une fente (21) qui est ouverte au moins vers un côté tourné vers le capteur de rotation (30) lors du montage et
dans laquelle la fente (21) présente au moins par sections sur les deux côtés s'étendant en direction de l'axe longitudinal (L) une section d'extrémité (22) mise en place radialement vers l'intérieur qui est réalisée afin de former la liaison à complémentarité de formes entre le capteur de rotation (30) et la douille de serrage (20) avec une saillie (31) du capteur de rotation (30).

2. Douille de serrage (20) selon la revendication 1, dans laquelle la section d'extrémité (22) mise en place vers l'intérieur est réalisée de manière élastique ou à ressort.

3. Douille de serrage (20) selon l'une quelconque des revendications précédentes, dans laquelle la douille de serrage (20) présente au moins par sections au niveau d'une section d'extrémité axiale par rapport à l'axe longitudinal (L) une saillie de douille de serrage (23) qui dépasse radialement vers l'extérieur par rapport à l'axe longitudinal (L).

4. Douille de serrage (20) selon l'une quelconque des revendications précédentes, dans laquelle la douille de serrage (20) présente au moins un élément de ressort (24) au niveau de sa surface enveloppe (20a).

5. Douille de serrage (20) selon l'une quelconque des revendications précédentes, dans laquelle la douille de serrage (20) présente une aide au montage (25) pour le montage en position orientée dans l'ouverture de réception (11).

6. Douille de serrage (20) selon la revendication 5, dans laquelle l'aide au montage (25) est réalisée à partir d'une épine dépassant de l'ouverture de réception (11) dans la position d'application avec un niveau à bulle monté dessus.

7. Douille de serrage (20) selon la revendication 5 ou 6, dans laquelle l'aide au montage (25) est réalisée à partir d'une épine avec un gabarit monté dessus.

8. Douille de serrage (20) selon l'une quelconque des revendications 5 à 7, dans laquelle l'aide au montage (25) forme une liaison à complémentarité de formes avec le dispositif de réception (10).

9. Douille de serrage selon l'une quelconque des revendications 5 à 8, dans laquelle l'aide au montage (25) est reliée de manière amovible à la douille de serrage (20).

10. Ensemble de capteur de rotation (1) présentant :
une douille de serrage (20) selon l'une quelconque des revendications 1 à 9 et
un capteur de rotation (30) qui est réalisé afin d'être introduit dans la douille de serrage (20) au moins par sections en direction de l'axe longitudinal (L),
dans lequel le capteur de rotation (30) présente au moins par sections une saillie de capteur de rotation (31) qui fait saillie radialement vers l'extérieur par rapport à l'axe longitudinal (L) de sorte qu'une liaison à complémentarité de formes puisse être réalisée entre le capteur de rotation (30) et la douille de serrage (20) par le biais d'une saillie de capteur de rotation (31) lors de l'introduction du capteur de rotation (30) dans la douille de serrage (20).

11. Ensemble de capteur de rotation (1) selon la revendication 10, dans lequel la saillie de capteur de rotation (31) s'étend en direction de l'axe longitudinal (L) au moins sur.une section qui forme la liaison par complémentarité de formes avec la douille de serrage dans une position d'application prédéterminée.

12. Système de capteur de rotation (100) présentant :
une douille de serrage (20) selon l'une quelconque des revendications 1 à 9,
un capteur de rotation (30) selon l'ensemble de capteur de rotation (1) selon la revendication 10 ou 11 ainsi que
un dispositif de réception (10) avec au moins une ouverture de réception (11) qui s'étend en direction de l'axe longitudinal (L),
dans lequel la douille de serrage est maintenue au moins par frottement et le capteur de rotation (30) au moins par liaison à complémentarité de formes avec la douille de serrage (20) de manière solidaire en rotation dans l'ouverture de réception (11).

13. Système de capteur de rotation (100) selon la revendication 12, dans lequel l'ouverture de réception (11) est une ouverture traversante en direction de l'axe longitudinal (L).
